# EUROPÄISCHE PATENTANMELDUNG

(11) **EP 0 923 255 A2**
(43) Veröffentlichungstag der Anmeldung: **16.06.1999**
(21) Anmeldenummer: 98121534.6
(22) Anmeldetag: 17.11.1998
(51) Int. Cl.: H04Q 7/22

(54) **Verfahren, Kommunikationssystem und zentrale Bedieneinheit zur Administration von Gruppen bei Gruppenanrufen**

(30) Priorität: 11.12.1997 DE 19755137
(71) Anmelder: SIEMENS AKTIENGESELLSCHAFT, 80333 München (DE)
(72) Erfinder: Hultsch, Wolfgang, 81369 München (DE); Prüser, Jürgen, 36251 Bad Hersfeld (DE)

(57) **Zusammenfassung**

Das Verfahren bzw. Kommunikationssystem zur Administration der Gruppen geht aus von einer Funkübertragung und von einer Kommunikation über jeweils an die Gruppe von Funkteilnehmern gerichtete Gruppenanrufe, die jeweils durch eine Gebietskennung und durch eine Gruppenkennung (GRID1, GRID2 ...) definiert werden. Erfindungsgemäß wird eine Gruppenzugehörigkeit (GRAC) der Funkteilnehmer zu mindestens einer Gruppe an einer zentralen Stelle (CPS) vergeben und administriert, und es werden Nachrichten (SM, BC-SM) über die aktuelle Gruppenzugehörigkeit eines oder mehrerer Funkteilnehmer zu den Mobilstationen (MS1, MS2) der zur Gruppe gehörigen Funkteilnehmer gesendet. Das erfindungsgemäße Verfahren und Kommunikationssystem sowie die entsprechende zentrale Bedieneinheit zur zentralen Vergabe und Administration hat gegenüber dem manuellen, individuellen, von dem Funkteilnehmer gesteuerten Einstellen die Vorteile eines geringen Ressourcenverbrauchs zur Mitteilung der Gruppenzugehörigkeit - insbesondere bei einer Broadcast-Übertragung an mehrere Mobilstationen - , einer Erhöhung der Betriebssicherheit, einer beschleunigten Aktualisierung der Gruppenzugehörigkeit und einer Vermeidung von Mißbrauch. Bedienhandlungen des Funkteilnehmers sind überflüssig, die Verwaltung der Gruppen und der Gruppenzugehörigkeit erfolgt nicht individuell an der Mobilstation, sondern an zentraler Stelle.

## Beschreibung

Verfahren, Kommunikationssystem und zentrale Bedieneinheit zur Administration von Gruppen bei Gruppenanrufen

Die Erfindung betrifft ein Verfahren zur Administration von Gruppen bei Gruppenanrufen in einem Kommunikationssystem, sowie ein entsprechendes Kommunikationssystem und eine zentrale Bedieneinheit.

In einem Kommunikationssystem, beispielsweise einem Funk-Kommunikationssystem nach dem GSM-Standard (Global System for Mobile Communication), besteht die Möglichkeit, eine Kommunikation über an eine Gruppe von Funkteilnehmern gerichtete Gruppenanrufe (group call) zu führen. So sind beispielsweise gemäß den GSM-Empfehlungen 03.68 (ETS 300 933, Voice Group Call Service VGCS) und 03.69 (ETS 300 934, Voice Broadcast Service VBS) Gruppenanrufe an eine Gruppe von Funkteilnehmern möglich, für die der entsprechende Dienst im Netz vorgesehen ist. Dabei befinden sich die Teilnehmer der Gruppe in einem üblicherweise aus mehreren Funkzellen bestehenden Gruppenanruf-Versorgungsbereich (Service Area), der von einer Mobilvermittlungsstelle eines Mobilfunknetzes betreut wird. Für die Verwaltung und Behandlung der Gruppenanrufe werden Gruppenkennungen (group identities) zur Kennzeichnung der vom Gruppenanruf betroffenen Gruppe von Teilnehmern benutzt. Die Funkübertragung auf der Funkschnittstelle verläuft zwischen einer oder mehreren Mobilstationen und zumindest einer Basisstation des Mobilfunknetzes.

Im Kapitel 8.2 auf Seite 18 der GSM- Empfehlung 03.68 (Version 5.2.1 von August 1997) ist beschrieben, daß in einer Datenbasis des Netzes (HLR) eingetragen ist, welche Mobilstation - ist gleichbedeutend mit Funkteilnehmer - für welche Gruppen Anrufe annehmen oder initiieren darf. Nicht bekannt ist in der Datenbasis, welche Gruppenkennung eines Funkteilnehmers mit Gruppenanruf-Registrierung gerade als aktiv gekennzeichnet ist. Diese Information ist nur in der Mobilstation verfügbar, die - veranlaßt durch z.B. eine MMI-Eingabe (Man-Machine-Interface) des Funkteilnehmers - eine Gruppenkennung aktivieren oder deaktivieren kann. Somit kann die Gruppenzugehörigkeit nur durch eine Bedienaktion an der jeweiligen Mobilstation verwaltet werden. Alle Gruppenkennungen müssen vordefiniert und vorab netzseitig sowie mobilstationsseitig gespeichert werden. Eine individuelle, manuelle Verwaltung - dezentral bei den Mobilstationen - durch selbsttätiges Einstellen birgt das Risiko des Mißbrauchs durch Gruppenmitglieder und der mangelnden Betriebssicherheit in sich. Darüber hinaus ist ein hoher Ressourcenaufwand zur Mitteilung der aktuellen Gruppenzugehörigkeit - beispielsweise durch einen gesonderten, vorhergehenden Anruf bei einer definierten Stelle - via Sprach- oder Datenübermittlung notwendig. Fehleranfälligkeit, hoher Zeitverbrauch und mangelnde Flexibilität sind weitere unbefriedigende Begleiterscheinungen der manuellen, vom Funkteilnehmer dezentral steuerbaren Einstellung der Gruppenzugehörigkeit.

Daher ist es Aufgabe der vorliegenden Erfindung, das Verfahren und Kommunikationssystem zur Verwaltung der Gruppen bei Gruppenanrufen zu verbessern.

Diese Aufgabe wird gemäß der Erfindung durch die Merkmale des Patentanspruchs 1 hinsichtlich des Verfahrens und durch die Merkmale des Patentanspruchs 12 hinsichtlich des Kommunikationssystems gelöst. Darüber hinaus ist eine zentrale Bedieneinheit angegeben, die mit den Merkmalen des Patentanspruchs 13 die obige Aufgabe erfindungsgemäß löst. Weiterbildungen der Erfindung sind in den Unteransprüchen angegeben.

Das Verfahren bzw. Kommunikationssystem zur Administration der Gruppen geht aus von einer Funkübertragung und von einer Kommunikation über jeweils an die Gruppe von Funkteilnehmern gerichtete Gruppenanrufe, die jeweils durch eine Gebietskennung und durch eine Gruppenkennung definiert werden. Erfindungsgemäß wird eine Gruppenzugehörigkeit der Funkteilnehmer zu mindestens einer Gruppe an einer zentralen Stelle vergeben und administriert, und es werden Nachrichten über die aktuelle Gruppenzugehörigkeit eines oder mehrerer Funkteilnehmer zu den Mobilstationen der zur Gruppe gehörigen Funkteilnehmer gesendet.

Das erfindungsgemäße Verfahren und Kommunikationssystem sowie die entsprechende zentrale Bedieneinheit zur zentralen Vergabe und Administration hat gegenüber dem manuellen, individuellen, von dem Funkteilnehmer gesteuerten Einstellen die Vorteile eines geringen Ressourcenverbrauchs zur Mitteilung der Gruppenzugehörigkeit - insbesondere bei einer Broadcast-Übertragung an mehrere Mobilstationen - , einer Erhöhung der Betriebssicherheit, einer beschleunigten Aktualisierung der Gruppenzugehörigkeit und einer Vermeidung von Mißbrauch. Bedienhandlungen des Funkteilnehmers sind überflüssig, die Verwaltung der Gruppen und der Gruppenzugehörigkeit erfolgt nicht individuell an der Mobilstation, sondern an zentraler Stelle. Die zentral gesteuerte Vergabe und Administration der Gruppenzugehörigkeit und das automatische Senden der Nachrichten über die aktuelle Gruppenzugehörigkeit - - insbesondere zu deren Aktualisierung in der oder den betroffenen Mobilstationen - stellt eine flexible, schnelle und wenig fehleranfällige Vorgehensweise dar.

Von Vorteil ist es, wenn die Nachrichten zumindest die Gruppenkennung und den oder die von der Gruppenzugehörigkeit betroffenen Funkteilnehmer kennzeichnende Nummern enthalten. Dabei weisen die Nachrichten gemäß einer Weiterbildung der Erfindung zusätzlich zur Gruppenkennung und den Nummern eine Steuerinformation zur Angabe einer von der Mobilstation durchzuführenden Aktion auf.

Gemäß einer Weiterbildung der Erfindung wird durch die Steuerinformation eine Aktualisierung der Gruppenzugehörigkeit von der Mobilstation gefordert und durchgeführt. Dies kann gemäß vorteilhafter Ausgestaltungen zu einer Aktivierung der Gruppenzugehörigkeit durch Eintragen der Gruppenkennung in die Mobilstation oder zu einer Deaktivierung der Gruppenzugehörigkeit durch Löschen der Gruppenkennung in der Mobilstation führen.

Es hat sich als günstig erwiesen, die Nachrichten jeweils gemäß einer Punkt-zu-Punkt Informationsübertragung einzeln an die Mobilstationen, die von der Gruppenzugehörigkeit betroffen sind, gesendet werden. Die Mobilstationen werden in diesem Fall günstigerweise anhand der Funkteilnehmerrufnummer identifiziert.

Als besonders günstig hinsichtlich der beschleunigten Aktualisierung der Gruppenzugehörigkeit hat es sich gezeigt, wenn die Nachrichten gemäß einer Punkt-zu-Multipunkt Informationsübertragung gleichzeitig an alle Mobilstationen, die von der Gruppenzugehörigkeit betroffen sind, in einem vorgebbaren Gebiet gesendet werden.

Vorzugsweise werden die Mobilstationen durch eine Broadcastnachricht, die in ein Broadcast-Gebiet gesendet wird, informiert und anhand einer dem Funkteilnehmer der Gruppe zugewiesenen Nummer identifiziert.

Das Kommunikationssystem gemäß dem Gegenstand der Erfindung weist eine zentrale Bedieneinheit zur Vergabe und Administration der Gruppenzugehörigkeit der Funkteilnehmer zu mindestens einer Gruppe und zum Senden von Nachrichten über die aktuelle Gruppenzugehörigkeit eines oder mehrerer Funkteilnehmer zu den Mobilstationen der zur Gruppe gehörigen Funkteilnehmer auf.

Die zentrale Bedieneinheit gemäß dem Gegenstand der Erfindung weist Mittel zur Vergabe und Administration einer Gruppenzugehörigkeit der Funkteilnehmer zu mindestens einer Gruppe und Mittel zum Senden von Nachrichten über die aktuelle Gruppenzugehörigkeit eines oder mehrerer Funkteilnehmer zu den Mobilstationen der zur Gruppe gehörigen Funkteilnehmer auf.

Die Erfindung wird anhand eines in Figuren dargestellten Ausführungsbeispiels näher erläutert. Im einzelnen zeigen
- Figur 1: in einem Blockschaltbild die zentrale Vergabe und Verwaltung von Gruppen und Gruppenzugehörigkeit mit einer Punkt-zu-Punkt Nachrichtenübertragung zu den Mobilstationen, und
- Figur 2: in einem Blockschaltbild die zentrale Vergabe und Verwaltung von Gruppen und Gruppenzugehörigkeit mit einer Punkt-zu-Multipunkt Nachrichtenübertragung zu den Mobilstationen.

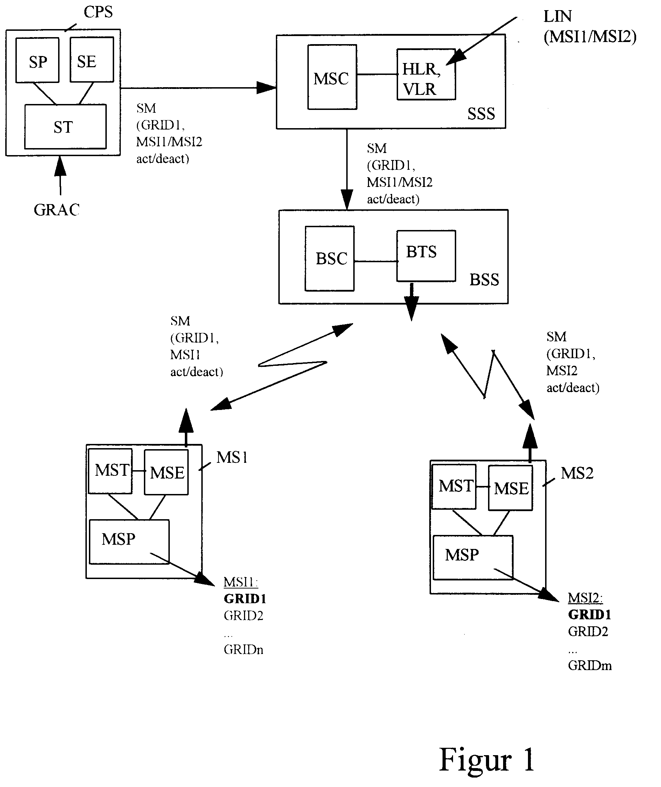

Das in FIG 1 dargestellte Blockschaltbild enthält Einrichtungen eines Kommunikationssystem, das beispielsweise als Funk-Kommunikationssystem ausgebildet ist und in seiner Struktur einem bekannten GSM-System entspricht. Die Einrichtungen sind ein funktechnisches Teilsystem BSS mit üblicherweise einer Mehrzahl von Basisstationen BTS und daran angeschlossenen Basisstationssteuerung BSC und ein vermittlungstechnisches Teilsystem SSS mit üblicherweise einer Mehrzahl von Mobilvermittlungsstellen MSC und daran angeschlossenen Teilnehmerdatenbasen HLR, VLR. Nicht dargestellt ist ein Operations- und Wartungszentrum, das Kontroll- und Wartungsfunktionen realisiert. Die Mobilvermittlungsstellen MSC sind untereinander vernetzt bzw. stellen den Zugang zu anderen Kommunikationsnetzen, z.B. einem Festnetz PSTN oder einem weiteren Mobilfunknetz, her. Weiterhin ist jede Mobilvermittlungsstell MSC mit einer Basisstationssteuerung BSC verbunden. Die Basisstationssteuerung BSC ermöglicht wiederum eine Verbindung zu mindestens einer Basisstation BTS. Eine solche Basisstation BS ist eine Funkstation, die zur Funkübertragung über eine Funkschnittstelle eine oder mehrere Funkverbindungen zu Mobilstationen - im vorliegenden Beispiel zu den Mobilstationen MS1, MS2 - aufbauen, abbauen und aufrechthalten kann. Die Funktionalität dieser Struktur ist nicht auf das dargestellte GSM-System beschränkt, sondern auch auf andere Kommunikationssysteme mit einer Funkschnittstelle übertragbar, sodaß die Erfindung auch dort zum Einsatz kommen kann.

In FIG 1 sind beispielhaft zwei Funkverbindungen zur Übertragung von Informationen in Nachrichten, z.B. Sprach- oder Dateninformationen oder Signalisierungsinformationen, zwischen der Basisstation BTS und den beiden Mobilstationen MS1, MS2 in der Abwärtsrichtung wie in der Aufwärtsrichtung dargestellt. Die Übertragung der Informationen erfolgt somit auf Punkt-zu-Punkt-Verbindungen. Zu diesem Zweck liefert die Teilnehmerdatenbasis HLR (Home Location Register) oder die Teilnehmerdatenbasis VLR (Visitor Location Register) eine Aufenthaltsinformation LIN (location info) über den zu einer Gruppe von Teilnehmern jeweils gehörigen Funkteilnehmer. Dabei ist der Funkteilnehmer durch seine Funkteilnehmerkennung - z.B. MSI1/MSI2 identifizierbar. Jede Mobilstation MS1, MS2 weist zumindest eine Speichereinrichtung MSP, eine Sende- und Empfangseinrichtung MSE und eine Steuereinrichtung MST auf.

Gruppenanrufe, die an eine Gruppe von Funkteilnehmern gerichtet sind, können von einem Festnetzteilnehmer, der beispielsweise an ein diensteintegrierendes digitales Netz ISDN oder an ein öffentliches Fernsprechnetz PSTN angeschlossen ist, oder einem Funkteilnehmer durch Wahl einer speziellen Rufnummer, die den Anruf als Gruppenanruf kennzeichnet, initiiert werden. Eine Gruppenanrufnummer, anhand der ein Anruf an eine Gruppe von Funkteilnehmern in einem Gruppenanruf-Versorgungsbereich (Service Area) gerichtet wird, weist eine Gruppenanrufreferenz (group call reference) mit einer Versorgungsbereichsinformation (Service Area Identity) zur Identifikation des Gruppenanruf-Versorgungsbereichs sowie mit einer Gruppeninformation (GroupIdentity) zur Identifikation der vom Gruppenanruf betroffenen Gruppe von Funkteilnehmern. Darüber hinaus ist ein Netzzugangscode, bestehend aus einer Landeskennzahl, die das jeweilige Land in dem länderübergreifenden System angibt, und aus einer nationalen Dienstkennzahl, die den nationalen Versorgungsbereich in diesem Land bestimmt, enthalten.

Gemäß der Erfindung erfolgt die Administration der Gruppen bei Gruppenanrufen derart, daß an einer zentralen Stelle - beispielsweise im Netz als eigenständige Netzeinrichtung oder als Teil einer bestehenden Netzeinrichtung oder außerhalb des Netzes mit oder ohne zwischengeschaltete zusätzliche Einrichtungen - die Gruppenzugehörigkeit der Funkteilnehmer zu mindestens einer Gruppe vergeben und administriert wird. Dies leistet eine zentrale Bedieneinheit CPS, die zumindest eine Speichereinrichtung SP, Sende- und Empfangseinrichtung SE und Steuereinrichtung ST zur Durchführung des erfindungsgemäßen Verfahrens aufweist. Die zentrale Bedieneinheit CPS ist im vorliegenden Beispiel über das Teilsystem SSS, das die Information LIN über den Aufenthaltsort des Funkteilnehmers bzw. seiner Mobilstation bereitstellt, mit dem Teilsystem BSS verbunden, um von ihr generierte Nachrichten SM in Abwärtsrichtung zu der oder den Mobilstationen MS1, MS2 in Einzelverbindungen senden zu können.

Die Gruppenzugehörigkeit(en) GRAC der Funkteilnehmer zu einer oder mehreren Gruppen und deren Aktualisierung durch Aktivierung oder Deaktivierung werden - beispielsweise über eine MMI-Schnittstelle (Man-Machine-Interface) - in die zentrale Bedieneinheit CPS eingegeben, gespeichert und zentral verwaltet. So werden beispielsweise Änderungen der Gruppenzugehörigkeit GRAC zentral veranlaßt und von einer Applikation in der Steuereinrichtung ST in entsprechende Nachrichten SM umgesetzt, und die Nachrichten SM an die einzelnen von der Änderung betroffenen Funkteilnehmer - ist gleichbedeutend im vorliegenden Beispiel mit den Mobilstationen MS1, MS2 - über die Punkt-zu-Punkt Verbindung gesendet. Die Nachricht SM enthält für einen oder mehrere Funkteilnehmer die aktuelle Gruppenkennung - im Beispiel GRID1 - , eine Nummer - vorzugsweise die Funkteilnehmerkennung, im Beispiel MSI1 bzw. MSI2 - und eine Steuerinformation - im Beispiel act oder deact - , zur Durchführung einer Aktion. Anhand der empfangenen Steuerinformation act erfolgt die Aktualisierung der Gruppenzugehörigkeit derart, daß die mitgesendete Gruppenkennung GRID1 in die jeweilige Mobilstation MS1, MS2 eingetragen oder eine bisher eingetragene Gruppenkennung überschrieben wird. Hingegen wird durch die Steuerinformation deact die Aktualisierung der Gruppenzugehörigkeit derart vorgenommen, daß die mitgesendete Gruppenkennung GRID1 in der jeweiligen Mobilstation MS1, MS2 gelöscht wird.

Die Mobilstation MS1, MS2 empfängt die Nachricht SM über die Sende- und Empfangseinrichtung MSE, analysiert die darin enthaltenen Informationen in der Steuereinrichtung MST und führt die geforderte Aktion durch Eintragen der Gruppenkennung GRID1 bzw. Löschen der Gruppenkennung GRID1 aus. Alle für den durch die Funkteilnehmerkennung MSI1 identifizierbaren Funkteilnehmer relevanten Gruppenkennungen GRID1, GRID2...GRIDn der Gruppen, für die eine Gruppenzugehörigkeit vorliegt, sind vorzugsweise in einer Liste gespeichert. Zur Übertragung der Nachrichten SM können beispielsweise der an sich bekannte Kurzmitteilungsdienst (Short Message Service) und der USSD-Dienst (Unstructured Supplementary Services Data) für Containernachrichten verwendet werden. Vorzugsweise werden die Nachrichten SM automatisch generiert und gesendet und ihre gespeicherten Daten angepaßt, sobald die zentrale Bedieneinheit CPS eine Eingabe zur Aktualisierung registriert. Die zentrale Bedieneinheit CPS kann prinzipiell unabhängig von Art und Aufbau des Kommunikationsssystems angeordnet sein. Die gespeicherten Daten - Gruppenzugehörigkeit GRAC, Funkteilnehmernummer MSI1/MSI2 usw. - könne auch in einem eigenen, von der Bedieneinheit CPS getrennten Datenspeicher liegen und von der Bedieneinheit CPS gelesen, gelöscht und verändert werden. Vorzugsweise erfolgt die zentrale Vergabe und Administration der Gruppen und Gruppenzugehörigkeit von der zentralen Bedieneinheit CPS aus in einem bestimmten, vorgebbaren Gebiet, z.B. im Bereich eines Bahnhofs, in dem die Funkteilnehmer zumindest einer Gruppe über die Gruppenanrufe erreichbar sind.

Obiges Verfahren gilt ebenso für weitere Funkteilnehmer bzw. Mobilstationen, sodaß im vorliegenden Beispiel auch eine Nachricht SM - u.a mit der Gruppenkennung GRID1 - für die Aktualisierung der Gruppenzugehörigkeit des durch die Funkteilnehmerkennung MSI2 identifizierbaren Funkteilnehmers von der zentralen Bedieneinheit CPS generiert und über das Teilsystem SSS und das Teilsystem BSS zur Mobilstation MS2 Punkt-zu-Punkt übertragen wird. In deren Speichereinrichtung MSP ist eine Liste von Gruppenkennungen GRID1, GRID2...GRIDm der für den Funkteilnehmer relevanten Gruppen vorgesehen, die entsprechend der zentral erzeugten, eintreffenden Informationen in der Nachricht SM modifiziert werden.

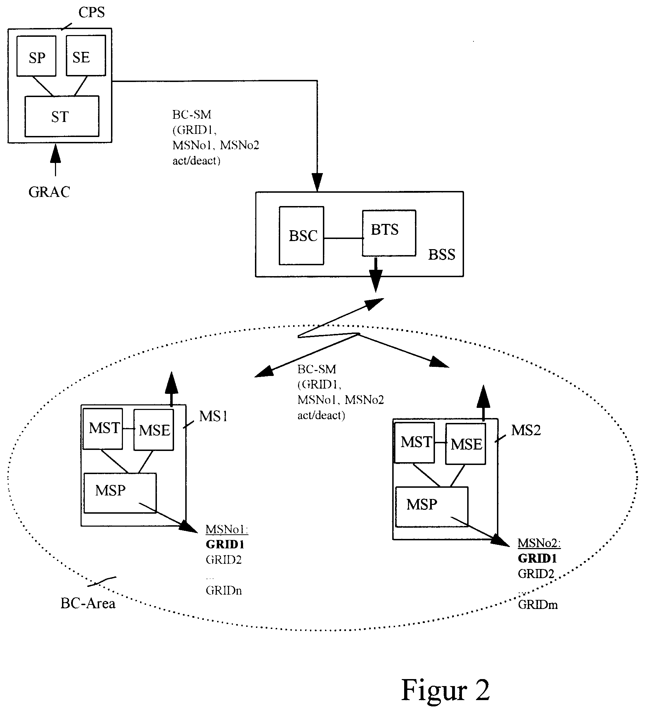

Figur 2 zeigt ein Alternative des Nachrichtenflusses für die zentrale Vergabe und Verwaltung von Gruppen und Gruppenzugehörigkeit anhand eines zur Darstellung in Figur 1 fast identischen Blockschaltbildes. Der einzige Unterschied liegt im Senden der von der zentralen Bedieneinheit CPS generierten Nachrichten als Broadcast Nachricht BC-SM, die Punkt-zu-Multipunkt zu allen Mobilstationen MS1, MS2, die von der Gruppenzugehörigkeit betroffen sind, in einem vorgebbaren Gebiet gleichzeitig übertragen werden. Dieses Gebiet ist vorzugsweise ein Broadcast-Gebiet BC-Area, wobei dieMobilstationen MS1, MS2 anhand jeweils einer dem Funkteilnehmer der Gruppe zugewiesenen Nummer MSNo1, MSNo2 - die nicht mit der Funkteilnehmerkennung MSI1, MSI2 identisch sein muß, aber durchaus sein kann, und auf eine minimale Länge begrenzt sein kann - identifiziert werden. Diese Nummern MSNo1, MSNo2 sind für die einzelnen Gruppenmitglieder in jeder von mehreren Broadcast-Gebieten BC-Area vergeben worden. Sie sind außerdem vorzugsweise unabhängig von der jeweiligen Funkteilnehmerkennung gewählt und sowohl in der Bedieneinheit CPS als auch in der einzelnen Mobilstation MS1, MS2 gespeichert. Die Broadcast-Nachricht BC-SM enthält die aktuelle Gruppenkennung GRID1, einen oder mehrere Funkteilnehmer als von der Gruppenzugehörigkeit GRAC betroffene Gruppenmitglieder - vorzugsweise als Liste, erkennbar an den Nummern MSNo1, MSNo2, sowie die Steuerinformation act oder deact. Eine Applikation in der Steuereinrichtung MST der Mobilstation MS1, MS2 analysiert die empfangenen Informationen der Broadcast-Nachricht BC-SM und führt die geforderte Aktion - Aktivierung/Deaktivierung - bezüglich der mitgesendeten Gruppenkennung(en) GRID1 aus, sofern die empfangene Broadcast-Nachricht BC-SM für diese Mobilstation im Gebiet BC-Area bestimmt ist. Dies ist dann der Fall, wenn die eigene Nummer - im vorliegenden Beispiel MSNo1 oder MSNo2 - in der Liste der Nummern in der Broadcast-Nachricht BC-SM enthalten ist. Als bevorzugter Dienst zur Nachrichtenübertragung kann der an sich bekannte Sammelruf-Dienst SMSCB (Short Message Service-Cell Broadcast) benutzt werden.

## Patentansprüche

1. Verfahren zur Administration von Gruppen bei Gruppenanrufen in einem Kommunikationssystem mit
- einer Funkschnittstelle für eine Funkübertragung zwischen zumindest einer Mobilstation (MS1, MS2) und einer Basisstation (BTS),
- einer Kommunikation über jeweils an eine Gruppe von Funkteilnehmern gerichtete Gruppenanrufe, die jeweils durch eine Gebietskennung (SAID) zur Identifikation eines Gruppenanruf-Versorgungsbereichs, in dem die Funkteilnehmer sich aufhalten, und durch eine Gruppenkennung (GRID1, GRID2...) definiert werden,
bei dem
- eine Gruppenzugehörigkeit (GRAC) der Funkteilnehmer zu mindestens einer Gruppe an einer zentralen Stelle (CPS) vergeben und administriert wird, und
- Nachrichten (SM, BC-SM) über die aktuelle Gruppenzugehörigkeit eines oder mehrerer Funkteilnehmer zu den Mobilstationen (MS1, MS2) der zur Gruppe gehörigen Funkteilnehmer gesendet werden.

2. Verfahren nach Anspruch 1, bei dem
die Nachrichten (SM, BC-SM) zumindest die Gruppenkennung (GRID1) und den oder die von der Gruppenzugehörigkeit betroffenen Funkteilnehmer kennzeichnende Nummern (MSI1/MSI2, MSNo1, MSNo2) enthalten.

3. Verfahren nach Anspruch 2, bei dem
die Nachrichten (SM, BC-SM) zusätzlich zur Gruppenkennung (GRID1) und den Nummern (MSI1/MSI2, MSNo1, MSNo2) eine Steuerinformation (deact, act) zur Angabe einer von der Mobilstation (MS1, MS2) durchzuführenden Aktion enthalten.

4. Verfahren nach Anspruch 3, bei dem
durch die Steuerinformation (deact, act) eine Aktualisierung der Gruppenzugehörigkeit von der Mobilstation (MS1, MS2) gefordert und durchgeführt wird.

5. Verfahren nach Anspruch 3 oder 4, bei dem
durch die Steuerinformation (act) eine Aktivierung der Gruppenzugehörigkeit durch Eintragen der Gruppenkennung (GRID1) in die Mobilstation (MS1, MS2) gefordert und durchgeführt wird.

6. Verfahren nach Anspruch 3 oder 4, bei dem
durch die Steuerinformation (dect) eine Deaktivierung der Gruppenzugehörigkeit durch Löschen der Gruppenkennung (GRID1) in der Mobilstation (MS1, MS2) gefordert und durchgeführt wird.

7. Verfahren nach einem der vorhergehenden Ansprüche, bei dem
die Gruppenkennung (GRID1, GRID2...) an der zentralen Stelle (CPS) und in den Mobilstationen (MS1, MS2) der Funkteilnehmer gespeichert wird.

8. Verfahren nach einem der vorhergehenden Ansprüche, bei dem
die Nachrichten (SM) jeweils gemäß einer Punkt-zu-Punkt Informationsübertragung einzeln an die Mobilstationen(MS1, MS2), die von der Gruppenzugehörigkeit betroffen sind, gesendet werden.

9. Verfahren nach Anspruch 8, bei dem
die Mobilstationen (MS1, MS2) anhand der Funkteilnehmerkennung (MSI1/MSI2) identifiziert werden.

10. Verfahren nach einem der vorhergehenden Ansprüche, bei dem die Nachrichten (SM) gemäß einer Punkt-zu-Multipunkt Informationsübertragung gleichzeitig an alle Mobilstationen(MS1, MS2), die von der Gruppenzugehörigkeit betroffen sind, in einem vorgebbaren Gebiet gesendet werden.

11. Verfahren nach Anspruch 10, bei dem
die Mobilstationen (MS1, MS2) durch eine Broadcastnachricht (BC-SM), die in ein Broadcast-Gebiet (BC-Area) gesendet wird, informiert und anhand einer dem Funkteilnehmer der Gruppe zugewiesenen Nummer (MSNo1, MSNo2, MSI1/MSI2) identifiziert werden.

12. Kommunikationssystem zur Administration von Gruppen bei Gruppenanrufen, das
- eine Funkschnittstelle für eine Funkübertragung zwischen zumindest einer Mobilstation (MS1, MS2) und einer Basisstation (BTS) aufweist,
- eine Kommunikation über jeweils an eine Gruppe von Funkteilnehmern gerichtete Gruppenanrufe ermöglicht, die jeweils durch eine Gebietskennung (SAID) zur Identifikation eines Gruppenanruf-Versorgungsbereichs, in dem die Funkteilnehmer sich aufhalten, und durch eine Gruppenkennung (GRID1, GRID2...) definiert sind,
mit
- einer zentralen Bedieneinheit (CPS) zur Vergabe und Administration einer Gruppenzugehörigkeit (GRAC) der Funkteilnehmer zu mindestens einer Gruppe und zum Senden von Nachrichten (SM, BC-SM) über die aktuelle Gruppenzugehörigkeit eines oder mehrerer Funkteilnehmer zu den Mobilstationen (MS1, MS2) der zur Gruppe gehörigen Funkteilnehmer.

13. Zentrale Bedieneinheit (CPS) zur Durchführung des Verfahrens nach Anspruch 1, mit
- Mittel (ST) zur Vergabe und Administration einer Gruppenzugehörigkeit (GRAC) der Funkteilnehmer zu mindestens einer Gruppe und
- Mittel (SE) zum Senden von Nachrichten (SM, BC-SM) über die aktuelle Gruppenzugehörigkeit eines oder mehrerer Funkteilnehmer zu den Mobilstationen (MS1, MS2) der zur Gruppe gehörigen Funkteilnehmer.
